# EUROPEAN PATENT SPECIFICATION

(11) **EP 1 165 317 B1**
(45) Date of publication and mention of the grant of the patent: **04.08.2004**
(21) Application number: 00905903.1
(22) Date of filing: 02.02.2000
(51) Int. Cl.: B32B 27/36

(54) **POLYMERIC FILM CONTAINING HEAT SEALABLE AND SUBSTRATE LAYERS**
POLYMERFILM ENTHALTEND HEISSSIEGEL- UND SUBSTRATSCHICHTEN
FILM POLYMERE CONTENANT UNE COUCHE THERMOSOUDABLE ET UNE COUCHE FORMANT SUBSTRAT

(30) Priority: 02.02.1999 GB 9902299
(43) Date of publication of application: 02.01.2002
(73) Proprietor: Dupont Teijin Films U.S. Limited Partnership, Wilmington, Delaware 19805 (US)
(72) Inventor: BRENNAN, William, James, Middlesborough North Yorkshire TS9 6DS (GB)
(74) Representative: Cockerton, Bruce Roger
(86) International application number: PCT/US2000/002564
(87) International publication number: WO 2000/046026

(56) References cited:
- EP-A- 0 026 006
- EP-A- 0 035 835
- EP-A- 0 719 636
- US-A- 5 484 632

## Description

### Background of the Invention

This invention relates to a polymeric film and, in particular, to a polymeric film for laminating to metal sheet.

Metal sheet laminated with polymeric materials is known, and used, *inter alia,* for forming beverage and food cans such as drawn and wall-ironed cans (known as DWI cans) and drawn and redrawn cans (known as DRD cans). The metal (generally steel or aluminium) needs protection from food and atmospheric corrosion and this is achieved by the use of a protective coating. The protective layer may be applied onto either the metal coil, individual sheets or the finished article (i.e. the can body or end). It is desirable for the protective coating to be applied as a precoat to the initial metal coil which would withstand subsequent forming and can making operations. The protective coating must be hard enough to give the requisite protection but formable enough to be coated on a coil and then shaped into a can or end without damage to the coating. In some applications, it has previously been necessary to apply a final coating to each final can or end.

Polyester films are currently used as a protective layer for metal used for beverage and food cans. The preferred method of application is to apply a free standing film of the polymer to the metal coil in an adhesive or thermal lamination process. Heat-sealable films bond to the metal surface at temperatures generally around 200°C and above. Heat-sealable polyethyleneterephthalate (PET) films consisting of a primary or substrate layer of PET (usually about 85% of the total film thickness) coextruded with a thinner amorphous layer of a lower melting point polyester capable of forming a heat-seal bond to a metal sheet are known and in commercial use. The PET polyester in the primary layer of such films typically contains minor amounts (less than 5%) of ethylene isophthalate units. The polyester of the heat-sealable layer generally contains ethylene terephthalate as the main repeating unit and typically contains about 12-25 mole % ethylene isophthalate units.

WO-A-95/08442 discloses a film which reduces inhomogeneities in the laminated film arising from steam treatment of the cans, the film having a substrate layer comprising a blend of 20 to 60 mole % PET and 80 to 40 mole % polybutylene terephthalate and a heat-sealable layer comprising a polyester (e.g. a copolyester of ethylene terephthalate as the main repeating unit and ethylene isophthalate) of melting point less than the polyesters in the substrate layer.

EP-A-0720533 discloses opaque polymeric films having a PET substrate layer and an opaque heat-sealable layer comprising a polyester (e.g. a copolyester of ethylene terephthalate as the main repeating unit and ethylene isophthalate) of melting point 20 to 60°C less than that of the substrate layer, the heat-sealable layer being typically 4 to 6 times thicker than the PET substrate layer.

EP-A-0026006 discloses a film which comprises a substrate layer of a substantially crystalline polyester material and a heat-sealable layer of a substantially amorphous cyclohexane-modified polyester material (so-called "PETG" material). The film may be formed by coextrusion and a subsequent molecular orientation step, the cyclohexane-modified polyester material retaining its amorphous nature while the polyester material of the substrate layer becomes crystalline.

A disadvantage with conventional polymeric films used for preparing metal-film laminates is that the PET substrate layer, i.e. the non heat-seal layer, generally has full biaxially-orientated crystallinity and has a tendency to crack and/or delaminate when the metal-film laminate is drawn and shaped into a can component.

One way to reduce the disadvantage of cracking and/or delamination during can-making is to utilise a higher temperature during the initial process of lamination of the film and metal. This may be achieved either by using a higher temperature at the bonding stage or by the use of a second stage of heating (the so-called T₂ temperature stage) after the bonding step. The temperature of this extra heating step should be sufficient to completely melt the polyester of the substrate layer. The use of the extra heating step, followed by a rapid quenching step, produces a laminate in which the polymeric film is substantially amorphous and has a structure which is very suitable for the subsequent drawing associated with the can-making process. A completely amorphous film having the maximum degree of drawability is desirable for both steel food cans and aluminium or steel beverage cans. Conventional metal-film laminates can withstand a draw ratio of approximately 300%, i.e. the laminates may be drawn to around 3 times their original dimension in both directions. At greater degrees of drawing, the substrate layer starts to crack and/or delaminate during the can-making process even if fully amorphous. There is therefore a need for a film which does not crack and/or delaminate during the can-making process at both high and low degrees of drawing.

For the end sections of aluminium can ends, such as beverage cans, the problem is more complex. Aluminium used for beverage can ends has to have the correct mechanical properties for it to fracture in order to open the can. Generally, the aluminium used for can ends is a more expensive alloy than that used for can bodies and is annealed at temperatures close to that required for the T₂ stage of the lamination process. A further disadvantage of conventional metal-film laminates is that the use of this additional heating step may result in the metal losing some of its desirable brittle properties. The requirements for the satisfactory processing of the aluminium must be balanced with the requirements for the preparation of a satisfactory polyester film. The film must be formable enough for the end to be made, particularly the rivet which holds the pull-tab onto the can. However, the film should also be brittle enough for the film layer to break cleanly when the tab on the can is pulled to open it. If the polymer remains too formable, the film layer may remain in one piece when the can is opened while the aluminium fractures as required, with the result that the film prevents liquid leaving the can. The T₂ temperature is critical to the end making process and optimally has been found to be a temperature which is approximately 30°C below the melting point (Tₘ) of the polymer of the substrate layer. There is therefore a need for a film in which the polymer of the substrate layer of the film has a sufficiently low Tₘ to allow the T₂ temperature, which is optimally about 30°C below this Tₘ, to be sufficiently far away from the annealing temperature of the aluminium used for can ends. A film having such a substrate layer would allow a lower T₂ temperature to be used during the lamination process which would therefore ensure that the metal retains its desirable properties. Such a film may also provide for a more economical manufacturing process.

A further disadvantage with conventional metal-film laminates is that when the can is subjected to subsequent heat treatment for processing the contents (e.g. pasteurisation and particularly retortion), delamination may occur at the interface between the PET layer and the heat-seal layer, i.e. film adhesion becomes very poor, particularly when certain fillers are used. There is therefore a need for a film which does not delaminate during heat treatment processing.

It is an object of this invention to provide a polymeric film suitable for laminating to a metal sheet that reduces or substantially overcomes the problems of cracking and/or delamination during the drawing associated with the can-making process.

It is a further object of this invention to provide a polymeric film suitable for laminating to a metal sheet, which is processable at a temperature lower than that normally used in the lamination process, such that the heating step in the lamination process does not substantially affect the desirable properties of aluminium used in the manufacture of can ends.

It is a still further object of this invention to provide a polymeric film suitable for laminating to a metal sheet that reduces or substantially overcomes the problem of delamination during subsequent heat treatment of a can formed from the metal sheet.

### Summary

According to the present invention there is provided a drawn polymeric film comprising an amorphous heat-sealable layer and a substrate layer, said heat-sealable layer comprising a copolyester of an aliphatic diol and a cycloaliphatic diol with one or more, preferably one, dicarboxylic acid, and said substrate layer being an oriented substrate layer comprising a copolyester of terephthalic acid (TPA) and isophthalic acid (IPA) with one or more diols selected from the group consisting of aliphatic and cycloaliphatic diols.

The drawn polymeric film of the present invention may be made by a process which comprises forming a substrate layer comprising a copolyester of terephthalic acid and isophthalic acid with one or more diols selected from the group consisting of aliphatic and cycloaliphatic diols, providing on a surface of the substrate layer an amorphous heat-sealable layer comprising a copolyester of an aliphatic diol and a cycloaliphatic diol with one or more, preferably one, dicarboxylic acid, and stretching the substrate layer and heat-sealable layer.

The drawn polymeric film of the present invention may be used as a protective coating layer on a metal sheet.

The drawn polymeric film of the present invention may be present in a laminated metal sheet comprising (i) a metal sheet, (ii) an optional primer layer, (iii) an optional paint layer, and (iv) said drawn polymeric film of the present invention. The heat-sealable layer is in contact with the optional paint layer, if present, or if the paint layer is not present then the heat-sealable layer is in contact with the optional primer layer, if present, or if neither the paint layer nor the primer layer are present, then the heat-sealable layer is in contact with the metal sheet.

### Brief Description of Drawings

Figure 1 is a schematic sectional elevation, not to scale, of a polymeric film having a substrate layer and a heat-sealable layer.
Figure 2 is a similar schematic elevation of a polymeric film with a metal sheet on the remote surface of the heat-sealable layer.

### Detailed Description

The polyester film is a self-supporting film by which is meant a self-supporting structure capable of independent existence in the absence of a supporting base. The thickness of the polyester film may vary over a wide range but preferably is within the range from 5 to 550 µm, preferably 5 to 350 µm more preferably 10 to 100 µm, particularly 12 to 50 µm, and especially 12 to 25 µm.

In a preferred embodiment of the invention, the polymeric film comprises a substrate layer having a thickness greater than that of the heat-sealable layer. The ratio of the thickness of the substrate layer to the heat-sealable layer is preferably in the range from 1.1 to 20 : 1, more preferably 2 to 10 : 1, particularly 3 to 7 : 1, and especially 4 to 6 : 1. The thickness of the substrate layer is preferably in the range from 5 to 500 µm, but will generally not exceed 300 µm, and is preferably be in a range from 5 to 80 µm, and more preferably 10 to 25 µm. The thickness of the heat-sealable layer is preferably in the range from 0.5 to 100 µm, more preferably 1 to 50 µm, particularly 1 to 15 µm, and especially 2 to 6 µm.

Preferably the molar ratios of the isophthalate polyester units to the terephthalate polyester units in the substrate layer are from 1 to 40 mol % isophthalate and from 99 to 60 mol % terephthalate, preferably from 15 to 20 mol % isophthalate and from 85 to 80 mol % terephthalate.

The terephthalic acid/isophthalic acid copolyester of the substrate layer may be obtained by condensation polymerisation of terephthalic acid and isophthalic acid with one or more diols, and preferably one diol. Suitable aliphatic diols include ethylene glycol, 1,3-propane diol, 1,3-butane diol, 1,4-butane diol, 1,5-pentane diol, neopentyl glycol and 1,6-hexane diol. Suitable cycloaliphatic diols include 1,4-cyclohexanedimethanol and 1,4-cyclohexane diol. It is preferred that the copolyester of the substrate layer is derived from an aliphatic diol, preferably ethylene glycol.

In a preferred embodiment, the substrate layer comprises a copolyester of ethylene isophthalate and ethylene terephthalate, preferably from 1 to 40 mol % ethylene isophthalate and from 99 to 60 mol % ethylene terephthalate and more preferably from 15 to 20 mol % ethylene isophthalate and 85 to 80 mol % ethylene terephthalate. In a particularly preferred embodiment the substrate layer comprises a copolyester comprising substantially 18 mol % ethylene isophthalate and 82 mol % ethylene terephthalate.

The copolyesters of the substrate layer of a film according to the invention have a melting point which is lower than the melting point of polyesters which comprise 100 mole % of terephthalate units, such as PET. Such copolyesters crystallise at a lower rate and show less stress when drawn. For example, a copolyester comprising about 18 mol % ethylene isophthalate and 82 mol % ethylene terephthalate has a melting point about 45°C less than that of standard PET. Preferably, the melting point of the copolyesters of the substrate layer is in the range from 180°C to 270°C, preferably, from 190°C to 250°C, and more preferably from 200°C to 220°C.

Preferably, the copolyester of TPA and IPA with the one or more diol(s) of the substrate layer comprises at least about 70%, more preferably at least about 80%, more preferably at least about 85%, more preferably at least about 90%, and more preferably at least about 95% by weight of the total amount of polyester or polymer in the second layer.

In an embodiment of the invention, the substrate layer is crystalline or semicrystalline. The substrate layer preferably has a degree of crystallinity in the range from 25% to 65%, more preferably 30% to 50%, and particularly 35% to 45%.

The substrate layer of the polymeric film according to the invention may be uniaxially oriented, but is preferably biaxially oriented by drawing in two mutually perpendicular directions in the plane of the film to achieve a satisfactory combination of mechanical and physical properties. Biaxial orientation may be effected by sequential stretching in two mutually perpendicular directions, typically at a temperature in the range from 70 to 125°C, and preferably heat set, typically at a temperature in the range from 150 to 250°C, for example as described in GB-A-838708. Formation of the film may be effected by any process known in the art for producing an oriented film of a polyester or copolyester comprising polyethylene terephthalate, for example a tubular or flat film process.

In a tubular process simultaneous biaxial orientation may be effected by extruding a thermoplastics copolyester tube which is subsequently quenched, reheated and then expanded by internal gas pressure to induce transverse orientation, and withdrawn at a rate which will induce longitudinal orientation.

In the preferred flat film process a film-forming copolyester is extruded through a slot die and rapidly quenched upon a chilled casting drum to ensure that the copolyester is quenched to the amorphous state. Orientation is then effected by stretching the quenched extrudate in at least one direction at a temperature above the glass transition temperature of the polymer. Sequential orientation may be effected by stretching a flat, quenched extrudate firstly in one direction, usually the longitudinal direction, ie the forward direction through the film stretching machine, and then in the transverse direction. Forward stretching of the extrudate is conveniently effected over a set of rotating rolls or between two pairs of nip rolls, transverse stretching then being effected in a stenter apparatus. Simultaneous stretching in the machine and traverse directions can be achieved in an appropriate tenter frame apparatus. A copolyester comprising polyethylene terephthalate is preferably stretched so that the dimension of the oriented film is from 2.5 to 4.5 times its original dimension in the, or each direction of stretching.

A stretched film may be, and preferably is, dimensionally stabilised by heat-setting under dimensional restraint at a temperature above the glass transition temperature of the film-forming copolyester but below the melting temperature thereof. Heat-setting of a polymeric film comprising a terephthalate/isophthalate copolyester substrate layer and a copolyester heat-sealable layer is conveniently effected at a temperature within a range of from 200 to 250°C to yield an essentially amorphous heat-sealable layer.

The heat-sealable layer of the polymeric film according to the invention is a layer capable of forming a heat-seal bond to a surface such as the surface of a metal sheet. The polyester material of the heat-sealable layer should soften to a sufficient extent that its viscosity becomes low enough to allow adequate wetting for it to adhere to the surface to which it is being bonded. The heat-seal bond is effected by heating to soften the polyester material of the heat-sealable layer, and optionally applying pressure, without melting (or otherwise affecting the structure or compromising the structural integrity of) the substrate layer. Thus, the polyester of the heat-sealable layer should begin to soften at a temperature such that the heat-seal bond can be formed at a temperature which is less than the melting temperature of the substrate layer. Preferably the polymer of the heat-sealable layer should begin to soften at a temperature such that the heat-seal bond can be formed at a temperature which is between about 5 and 50°C below, preferably between about 5 and 30°C below, and preferably at least about 10°C below the melting temperature of the polyester material of the substrate layer.

The heat-sealable layer comprises a copolyester derived from an aliphatic diol and a cycloaliphatic diol with one or more, preferably one, dicarboxylic acid(s), preferably an aromatic dicarboxylic acid, such as terephthalic acid, isophthalic acid, phthalic acid, hexahydroterephthalic acid, succinic acid, azelaic acid, adipic acid and sebacic acid. Suitable aliphatic diols include ethylene glycol, diethylene glycol, triethylene glycol, propylene glycol, 1,3-butane diol, 1,4-butane diol, 1,5-pentane diol, 2,2-dimethyl-1,3-propane diol, neopentyl glycol and 1,6-hexane diol. Suitable cycloaliphatic diols include 1,4-cyclohexanedimethanol and 1,4-cyclohexane diol.

Typical polyesters which provide satisfactory heat-sealable properties include copolyesters of an aliphatic diol and a cycloaliphatic diol with terephthalic acid, especially ethylene glycol and 1,4-cyclohexanedimethanol. The preferred molar ratios of the cycloaliphatic diol to the aliphatic diol are in the range from 10:90 to 60:40, preferably in the range from 20:80 to 40:60, and more preferably from 30:70 to 35:65. In a preferred embodiment the copolyester is a copolyester of terephthalic acid with about 33 mole % 1,4-cyclohexane dimethanol and about 67 mole % ethylene glycol. In an alternative embodiment of the invention, the heat-sealable layer may comprise butane diol in place of ethylene glycol.

Preferably, the copolyester of an aliphatic diol and a cycloaliphatic diol with one or more dicarboxylic acid(s) of the heat-sealable layer comprises at least about 70%, more preferably at least about 80%, more preferably at least about 85%, more preferably at least about 90%, more preferably at least about 95%, and more preferably at least about 99% by weight of the total amount of polyester or polymer in the heat-sealable layer.

The copolyester of the heat-sealable layer is a polymer which remains amorphous or substantially amorphous, i.e. non-crystalline. An example of such a polymer is PETG™6763 (Eastman) which comprises a copolyester of terephthalic acid, about 33% 1,4-cyclohexane dimethanol and about 67% ethylene glycol.

In a preferred embodiment, the amorphous polymer of the heat-sealable layer has a glass transition temperature (Tg) of at least 65°C, preferably at least 70°C and more preferably at least 80°C.

Formation of a polymeric film according to the invention may be effected by conventional techniques, for example by laminating together preformed layers, or by casting, for example, the heat-sealable layer onto a preformed substrate layer. Conveniently, however, formation of a polymeric film is effected by coextrusion, either by simultaneous coextrusion of the respective film-forming layers through independent orifices of a multi-orifice die, and thereafter uniting the still molten layers, or, preferably, by single-channel coextrusion in which molten streams of the respective polymers are first united within a channel leading to a die manifold, and thereafter extruded together from the die orifice under conditions of streamline flow without intermixing thereby to produce a multilayer polymeric film.

The substrate layer of the present invention is desirably optically clear, preferably having a % of scattered visible light (haze) of <6%, more preferably <3.5 % and particularly <1.5%, measured according to the standard ASTM D 1003.

In an alternative embodiment of the invention, the substrate layer is opaque, preferably exhibiting a Transmission Optical Density (TOD) (Sakura Densitometer; type PDA 65; transmission mode) in the range from 0.2 to 1.5, more preferably 0.25 to 1.25, more preferably from 0.35 to 0.75 and particularly 0.45 to 0.65. The substrate layer is conveniently rendered opaque by incorporation into the polyester blend of an effective amount of an opacifying agent. Suitable opacifying agents include an incompatible resin filler, a particulate inorganic filler or a mixture of two or more such fillers.

By an "incompatible resin" is meant a resin which either does not melt, or which is substantially immiscible with the polymer, at the highest temperature encountered during extrusion and fabrication of the layer. The presence of an incompatible resin usually results in a voided substrate layer, by which is meant that the substrate layer comprises a cellular structure containing at least a proportion of discrete, closed cells. Suitable incompatible resins include polyamides and olefin polymers, particularly a homo- or co-polymer of a mono-alpha-olefin containing up to 6 carbon atoms in its molecule. Preferred materials include a low or high density olefin homopolymer, particularly polyethylene, polypropylene or poly-4-methylpentene-1, an olefin copolymer, particularly an ethylene-propylene copolymer, or a mixture of two or more thereof. Random, block or graft copolymers may be employed.

The amount of incompatible resin filler present in the substrate layer is preferably in the range from 2% to 30%, more preferably 3% to 20%, particularly 4% to 15%, and especially 5% to 10% by weight, based on the weight of the substrate layer polymer.

Particulate inorganic fillers suitable for generating an opaque substrate layer include conventional inorganic pigments and fillers, and particularly metal or metalloid oxides, such as alumina, silica and titania, and alkaline metal salts, such as the carbonates and sulphates of calcium and barium. The particulate inorganic fillers may be of the voiding or non-voiding type. Suitable particulate inorganic fillers may be homogeneous and consist essentially of a single filler material or compound, such as titanium dioxide or barium sulphate alone. Alternatively, at least a proportion of the filler may be heterogeneous, the primary filler material being associated with an additional modifying component. For example, the primary filler particle may be treated with a surface modifier, such as a pigment, soap, surfactant coupling agent or other modifier to promote or alter the degree to which the filler is compatible with the substrate layer polyester.

In a particularly preferred embodiment of the invention, the particulate inorganic filler comprises titanium dioxide.

Production of a substrate layer having satisfactory degrees of opacity and preferably whiteness requires that the inorganic filler, particularly of titanium dioxide, should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.2 to 5 µm, more preferably 0.4 to 1.5 µm, and particularly 0.8 to 1.2 µm.

The size distribution of the inorganic filler, particularly titanium dioxide, particles is also an important parameter, for example the presence of excessively large particles can result in the film exhibiting unsightly 'speckle', i.e. where the presence of individual filler particles in the film can be discerned with the naked eye. It is preferred that none of the inorganic filler particles incorporated into the substrate layer should have an actual particle size exceeding 30 µm. Particles exceeding such a size may be removed by sieving processes which are known in the art. However, sieving operations are not always totally successful in eliminating all particles greater than a chosen size. In practice, therefore, the size of 99.9% by number of the inorganic filler particles should not exceed 30 µm, preferably should not exceed 20 µm, and more preferably should not exceed 15 µm. Preferably at least 90%, more preferably at least 95% by volume of the inorganic filler particles are within the range of the volume distributed median particle diameter ± 0.8 µm, and particularly ± 0.5 µm.
Particle size of the filler particles may be measured by electron microscope, coulter counter, sedimentation analysis and static or dynamic light scattering.

Techniques based on laser light diffraction are preferred. The median particle size may be determined by plotting a cumulative distribution curve representing the percentage of particle volume below chosen particle sizes and measuring the 50th percentile.

The amount of filler, particularly of titanium dioxide, incorporated into the substrate layer desirably should be not less than 1% nor exceed 30% by weight, based on the weight of the polyester present in the layer. Particularly satisfactory levels of opacity are achieved when the concentration of filler is in the range from about 5% to 20%, preferably 10% to 15%, and more preferably 12% to 13% by weight, based on the weight of the substrate layer polyester.

The preferred titanium dioxide particles may be of anatase or rutile crystal form. The titanium dioxide particles preferably comprise a major portion of rutile, more preferably at least 60 % by weight, particularly at least 80 % by weight, and especially approximately 100% by weight of rutile. The particles can be prepared by standard procedures, such as the chloride process or sulphate process.

In one embodiment of the invention the titanium dioxide particles are coated preferably with inorganic oxides such as aluminium, silicon, zinc, magnesium or mixtures thereof. It is preferred that the coating additionally comprises an organic compound, such as an alkanol or fatty acid, preferably having from 8 to 30, more preferably 12 to 24 carbon atoms. Polydiorganosiloxanes or polyorgano-hydrogensiloxanes, such as polydimethylsiloxane or polymethylhydrogensiloxane are particularly preferred.

The coating is applied to the titanium dioxide particles in aqueous suspension. The inorganic oxides are precipitated in aqueous suspension from water-soluble compounds such as sodium aluminate, aluminium sulphate, aluminium hydroxide, aluminium nitrate, silicic acid or sodium silicate.

The coating layer on the titanium dioxide particles is preferably in the range from 1 to 12%, more preferably 2 to 6% of inorganic oxides, and preferably in the range from 0.5 to 3%, and more preferably 0.7 to 1.5% of organic compound, by weight based upon the weight of titanium dioxide.

If both an incompatible resin filler, preferably a polyolefin, and a particulate inorganic filler, preferably titanium dioxide, are present in the substrate layer it is preferred that the concentration of the particulate inorganic filler is in the range from 1% to 30%, more preferably 1% to 15%, particularly 2% to 8%, and especially 3% to 7% by weight, based on the weight of the substrate layer polyester.

The components of the substrate layer compositions may be mixed together in a conventional manner. For example, by mixing with the monomeric reactants from which the substrate layer polyester is derived, or the components may be mixed with the polyester by tumble or dry blending or by compounding in an extruder, followed by cooling and, usually, comminution into granules or chips. Masterbatching technology may also be employed.

The heat-sealable layer may also comprise any of the particulate inorganic fillers described herein, preferably in amounts of less than 5%, preferably less than 2%, and preferably less than 1% by weight of the polyester of the heat-sealable layer.

Other additives, generally in relatively small quantities, may optionally be incorporated into the heat-sealable and/or substrate layer(s). For example, optical brighteners in amounts up to 1500 parts per million to promote whiteness, and dyestuffs in amounts of up to 10 parts per million to modify colour, the specified concentrations being by weight, based on the weight of the layer polymer(s).

The film of the present invention may also comprise, adjacent to the substrate layer and on the opposite side of the substrate layer relative to the heat-sealable layer, a third layer comprising an ink-receptive coating. The ink-receptive coating improves the adhesion of ink to the substrate layer and increases the range of inks that can be readily applied to the surface. The ink-receptive coating may be any such coating well-known to those skilled in the art. For example, the ink-receptive coating may comprise an acrylic component and a cross-linking component (e.g. melamine formaldehyde).

The substrate layer of a polymeric film according to the invention preferably exhibits a Deformation Index (DI) of greater than or equal to 2.5%, and a preferred layer exhibits a DI of not greater than about 50%. Preferably the substrate layer exhibits a DI within a range of from 3.5% to 20%, and more preferably 4.0% to 10%. Particularly desirable performance is observed with a DI of 4.5% to 7%. The DI is the deformation, expressed as a percentage of the original thickness of the layer, observed when a film of the layer is subjected, at a temperature of 200°C, to a pressure of 2 megaPascals applied normal to the plane of the sheet by the hereinafter described test procedure (calculating the average value of five measurements).

The heat-sealable layer of the polymeric film according to the invention preferably exhibits a DI less than that of the substrate layer. The DI of the heat-sealable layer is preferably less than or equal to 4.0%, more preferably less than or equal to 3.5% and particularly less than or equal to 2.5%.

In a preferred embodiment of the invention, the polymeric film has a percentage thermal shrinkage in the widthwise or transverse direction (TD) at 150°C in the range from 1% to 5%, preferably from 1% to 3%, more preferably from 1% to 2.5 % and desirably 0%. Preferably, the percentage thermal shrinkage in the lengthwise or machine direction (MD) is 2% to 20%, more preferably 2% to 15%, and particularly 2% to 10%.

The metal sheet to which the polymeric film according to the invention can be laminated to, is suitably aluminium or steel or alloys thereof. An aluminium sheet is preferably of 0.02 to 0.4 mm thickness, and a steel sheet is preferably of 0.05 to 0.4 mm thickness. The steel may be nickel, zinc or tin plate, black plate, phosphated black plate or electrically chromium coated with both chromium metal and chromium oxide. A suitable method of forming a laminated metal sheet and DWI cans is described in EP-A-0312304, the teaching of which is incorporated herein by reference. In a preferred process, the metal sheet is preheated to a temperature in the range from 140 to 350°C, the polymeric film is positioned on at least one side of the metal sheet (the heat-sealable layer being in contact with the metal sheet), and the assembly is passed through nip rolls. The resultant laminate is reheated to a temperature in the range from 200 to 300°C and rapidly quenched in a water bath.

The advantages of a film according to the present invention in relation to a standard heat-sealable film, for instance one comprising a main layer comprising only terephthalate units and a heat-sealable layer comprising a polyester other than a copolyester derived from an aliphatic and a cycloaliphatic diol are as follows:
a) When the metal-film laminate undergoes the process of shaping into a can component, the film may be subjected to higher degrees of drawing without cracking and/or delamination of the film. The metal-film laminates of the present invention show a draw ratio of about 400-500% before adhesive failure of the laminate occurs. It is believed that the lower stresses involved in stretching the substrate layer of a film according to this invention contribute to the increase in the amount of draw which can be achieved in the can-making process. An indication of how a metal-film laminate will perform when drawn during the can-making process can be obtained by considering tensile stress measurements, in particular the F5 and F50 measurements obtained using the ASTM D882-83 test. The F5 and F50 measurements are the tensile forces required to increase the dimensions of the film by 5% and 50% respectively. These tensile forces can be measured in the machine direction (MD) and the transverse direction (TD). A lower F5 or F50 value indicates that the film is more easily drawn and that a metal-film laminate prepared using such a film will perform better when drawn during the can-making process. The films of the present invention show F5 and F50 values that are lower in comparison to conventional films and can be used to prepare metal-film laminates which can be drawn to higher draw ratios without encountering the problems of delamination and/or cracking.
b) The ideal T₂ temperature adopted in the lamination process for aluminium sheet used for making can ends is 30°C below the Tₘ of the polymer of the substrate layer. The lower Tₘ of the TPA/IPA copolyester of the substrate layer allows the use of a lower T₂ temperature and one which is sufficiently below the annealing temperatures for aluminium. In the particularly preferred embodiment of the invention, for example, in which the substrate layer comprises a copolyester comprising substantially 18 mol % ethylene isophthalate and 82 mol % ethylene terephthalate, the T₂ temperature is around 180°C which is well below the annealing temperatures for aluminium. This could even allow a cheaper product to be made.
c) The heat-sealable layer according to the invention does not show the problem of delamination or poor seal adhesion on subsequent heat treatment of the can. It is believed that this is due to the amorphous nature of the heat-sealable layer. In contrast a conventional heat-sealable layer will crystallise and therefore become brittle, particularly under retortion conditions.
d) The lower crystallisation rate of the polymer of the substrate layer may improve the performance of the laminate in subsequent heat treatments of the substrate. It is believed that this may give a polymeric substrate layer having lower crystallinity which will therefore be less brittle. In addition, it is believed that the areas of crystallinity are fewer in number but each of a larger size which, on the basis that brittleness is related to the boundaries between crystallites, would also contribute to a less brittle material. It is not, however, intended that the invention be limited by this theory.

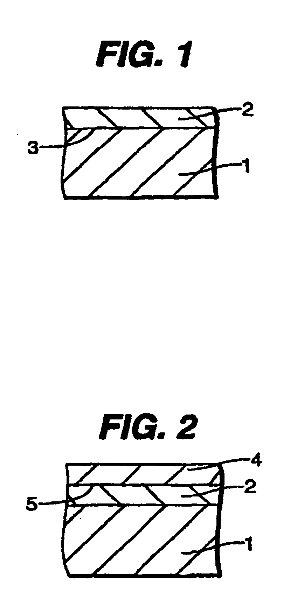

Referring to Figure 1 of the drawings, the polymeric film comprises a substrate layer (1), having a heat-sealable layer (2) bonded to one surface (3) of the substrate layer (1).

The film of Figure 2 further comprises a metal sheet (4) bonded to the remote surface (5) of the heat-sealable layer (2).

The invention is further illustrated by reference to the following examples.

### Examples

### Example 1

Separate streams of a heat-sealable layer copolyester of terephthalic acid, ethylene glycol and 1,4-cyclohexanedimethanol and a substrate layer copolyester of 82 mole % ethylene terephthalate and 18 mole % ethylene isophthalate comprising 0.125% by weight of the polymer of china clay of average particle size 0.8 µm were supplied from separate extruders to a single channel coextrusion assembly. The polymer layers were extruded through a film-forming die on to a water-cooled rotating, quenching drum to yield an amorphous cast composite extrudate. The cast extrudate was heated to a temperature of about 80°C and then stretched longitudinally at a forward draw ratio of 3.4:1. The polymeric film was passed into a stenter oven, where the sheet was stretched in the sideways direction to approximately 4 times its original dimensions. The biaxially stretched polymeric film was heat set at a temperature of about 190°C. Final film thickness was 20 µm. The heat-sealable layer was approximately 3 µm thick and the substrate layer was approximately 17 µm thick.

The film produced had an average thermal shrinkage at 150°C of 1.8% in the transverse direction (TD) and 3.4% in the machine direction (MD). The melting point of the copolyester of the substrate layer was about 215°C. The tensile forces required to stretch the film by 5% (F5) were 7.2 kg/mm² in the MD and 7.6 kg/mm² in the TD, and the forces required to give 50% (F50) elongation were 7.0 kg/mm² in the MD and 9.3 kg/mm² in the TD.

### Example 2

A film was prepared according to the method of Example 1 but using a temperature of 170°C to heat set the film. The film produced had an average thermal shrinkage at 150°C of 7% in the MD and 4.8% in the TD; an F5 value of 8.3 kg/mm² in the MD and 8.9 kg/mm² in the TD; and F50 values of 10.9 kg/mm² in the MD and 14.7 kg/mm² in the TD.

### Example 3

A film was prepared according to the method of Example 1 but using a temperature of 150°C to heat set the film. The film produced had an average thermal shrinkage at 154°C of 9% in the MD and 10% in the TD; an F5 value of 9.1 kg/mm² in the MD and 9.9 kg/mm² in the TD; and F50 values of 11.4 kg/mm² in the MD and 16.8 kg/mm² in the TD.

### Tensile Stress Measurements

The films according to Examples 1, 2 and 3 were subjected to tensile stress measurements according to ASTM D882-83. For comparison; a conventional film comprising a substrate layer of PET homopolymer and a heat-scalable layer comprising an amorphous copolymer of PET comprising 18% isophthalate units (the Comparative Example) was also tested. The results are shown in Table 1. The F5 and F50 tensile forces measured for the films of the present invention are significantly lower that those for the conventional film of the Comparative Example.

**Table 1**

| **Sample** | **F5 (kg/mm**^{**2**}**)** | **F50 (kg/mm**^{**2**}**)** |
|---|---|---|
| Comparative Example MD | 10.8 | 15.3 |
| Comparative Example TD | 10.7 | 17.5 |
| Example 1 MD | 7.2 | 7.0 |
| Example 1 TD | 7.6 | 9.3 |
| Example 2 MD | 8.3 | 10.9 |
| Example 2 TD | 8.9 | 14.7 |
| Example 3 MD | 9.1 | 11.4 |
| Example 3 TD | 9.9 | 16.8 |

## Claims

1. A drawn polymeric film comprising an amorphous heat-sealable layer and a substrate layer, said heat-sealable layer comprising a copolyester of an aliphatic diol and a cycloaliphatic diol with one or more dicarboxylic acid(s), and said substrate layer being an oriented substrate layer comprising a copolyester of terephthalic acid (TPA) and isophthalic acid (IPA) with one or more diol(s) selected from the group consisting of aliphatic and cycloaliphatic diols.

2. A film according to claim 1 wherein the substrate layer comprises a copolyester of TPA and IPA with one diol.

3. A film according to claim 1 wherein the substrate layer comprises a copolyester of TPA and IPA with an aliphatic diol.

4. A film according to claim 3 wherein said aliphatic diol is ethylene glycol.

5. A film according to claim 1 wherein the substrate layer comprises a copolyester comprising 1-40 mol % of ethylene isophthalate and 99-60 mol % ethylene terephthalate.

6. A film according to claim 5 wherein the substrate layer comprises a copolyester comprising 15-20 mol % of ethylene isophthalate and 80-85 mol % ethylene terephthalate.

7. A film according to claim 1 wherein said copolyester of TPA and IPA with said one or more diols comprises at least about 85% by weight of the total amount of polyester in the substrate layer.

8. A film according to claim 1 wherein the heat-sealable layer comprises a copolyester wherein the molar ratio of cycloaliphatic diol to aliphatic diol is in the range from 10:90 to 60:40.

9. A film according to claim 1 wherein the heat-sealable layer comprises a copolyester of an aliphatic diol and a cycloaliphatic diol with one dicarboxylic acid.

10. A film according to claim 1 wherein said copolyester of an aliphatic diol and a cycloaliphatic diol with one or more dicarboxylic acid(s) comprises at least about 85% by weight of the total amount of polyester in the heat-sealable layer.

## Patentansprüche

1. Gestreckter Polymerfilm, umfassend eine amorphe Heißsiegelschicht und eine Substratschicht, wobei die Heißsiegelschicht einen Copolyester aus einem aliphatischen Diol und einem cycloaliphatischen Diol mit einer oder mehreren Dicarbonsäure(n) umfaßt, und die Substratschicht eine ausgerichtete Substratschicht ist, die einen Copolyester aus Terephthalsäure (TPA) und Isophthalsäure (IPA) mit einem oder mehreren Diol(en), ausgewählt aus der Gruppe, bestehend aus aliphatischen und cycloaliphatischen Diolen, umfaßt.

2. Film nach Anspruch 1, wobei die Substratschicht einen Copolyester aus TPA und IPA mit einem Diol umfaßt.

3. Film nach Anspruch 1, wobei die Substratschicht einen Copolyester aus TPA und IPA mit einem aliphatischen Diol umfaßt.

4. Film nach Anspruch 3, wobei das aliphatische Diol Ethylenglykol ist.

5. Film nach Anspruch 1, wobei die Substratschicht einen Copolyester umfaßt, der 1 bis 40 Mol.-% Ethylenisophthalat und 99 bis 60 Mol.-% Ethylenterephthalat umfaßt.

6. Film nach Anspruch 5, wobei die Substratschicht einen Copolyester umfaßt, der 15 bis 20 Mol.-% Ethylenisophthalat und 80 bis 85 Mol.-% Ethylenterephthalat umfaßt.

7. Film nach Anspruch 1, wobei der Copolyester aus TPA und IPA mit dem einen oder den mehreren Diol(en) mindestens etwa 85 Gew.-% der Gesamtmenge an Polyester in der Substratschicht umfaßt.

8. Film nach Anspruch 1, wobei die Heißsiegelschicht einen Copolyester umfaßt, wobei das molare Verhältnis von cycloaliphatischem Diol zu aliphatischem Diol in einem Bereich von 10:90 bis 60:40 liegt.

9. Film nach Anspruch 1, wobei die Heißsiegelschicht einen Copolyester aus einem aliphatischen Diol und einem cycloaliphatischen Diol mit einer Dicarbonsäure umfaßt.

10. Film nach Anspruch 1, wobei der Copolyester aus einem aliphatischen Diol und einem cycloaliphatischen Diol mit einer oder mehreren Dicarbonsäure(n) mindestens etwa 85 Gew.-% der Gesamtmenge an Polyester in der Heißsiegelschicht umfaßt.

## Revendications

1. Film polymère étiré comprenant une couche amorphe thermosoudable et une couche substrat, ladite couche thermosoudable comprenant un copolyester d'un diol aliphatique et d'un diol cycloaliphatique avec un ou plusieurs acides dicarboxyliques, et ladite couche substrat étant une couche substrat orientée comprenant un copolyester de l'acide téréphtalique (TPA) et de l'acide isophtalique (IPA) avec un ou plusieurs diols choisis dans le groupe consistant en des diols aliphatiques et cycloaliphatiques.

2. Film selon la revendication 1, **caractérisé en ce que** la couche substrat comprend un copolyester de TPA et d'IPA avec un diol.

3. Film selon la revendication 1, **caractérisé en ce que** la couche substrat comprend un copolyester de TPA et d'IPA avec un diol aliphatique.

4. Film selon la revendication 3, **caractérisé en ce que** le diol aliphatique est l'éthylène glycol.

5. Film selon la revendication 1, **caractérisé en ce que** la couche substrat comprend un copolyester contenant de 1 à 40 % en moles d'éthylène isophtalate et de 99 à 60 % en moles d'éthylène téréphtalate.

6. Film selon la revendication 5, **caractérisé en ce que** la couche substrat comprend un copolyester contenant de 15 à 20 % en moles d'éthylène isophtalate et de 80 à 85 % en moles d'éthylène téréphtalate.

7. Film selon la revendication 1, **caractérisé en ce que** le copolyester de TPA et d'IPA avec un ou plusieurs desdits diols comprend au moins environ 85 % en poids de la quantité totale de polyester dans la couche substrat.

8. Film selon la revendication 1, **caractérisé en ce que** la couche thermosoudable comprend un copolyester dans lequel le rapport molaire de diol cycloaliphatique sur le diol aliphatique est dans le domaine allant de 10/90 à 60/40.

9. Film selon la revendication 1, **caractérisé en ce que** la couche thermosoudable comprend un copolyester d'un diol aliphatique et d'un diol cycloaliphatique avec un acide dicarboxylique.

10. Film selon la revendication 1, **caractérisé en ce que** ledit copolyester d'un diol aliphatique et d'un diol cycloaliphatique avec un ou plusieurs acides dicarboxyliques comprend au moins environ 85 % en poids de la quantité totale de polyester dans la couche thermosoudable.
